Europäisches Patentamt

European Patent Office

Office européen des brevets

(11) Veröffentlichungsnummer: **0 189 548**
**A1**

(12) **EUROPÄISCHE PATENTANMELDUNG**

(21) Anmeldenummer: 85115099.5

(22) Anmeldetag: 28.11.85

(51) Int. Cl.⁴: **H 04 N 5/91**

(30) Priorität: 30.11.84 DE 3443857

(43) Veröffentlichungstag der Anmeldung:
06.08.86 Patentblatt 86/32

(84) Benannte Vertragsstaaten:
AT BE CH DE FR GB IT LI LU NL SE

(71) Anmelder: VPS Video-Programm Service GmbH
Saarstrasse 7
D-8000 München 40(DE)

(72) Erfinder: Rienecker, Wolfgang, Dr.-Ing.
Rosenstrasse 1
D-8522 Herzogenaurach(DE)

(74) Vertreter: Von Puttkamer, Nikolaus
Pienzenauerstrasse 2
D-8000 München 80(DE)

(54) Verfahren zur Kopiergeschützten, magnetischen Aufzeichnung von Videosignalen.

(57) Die Erfindung betrifft ein Verfahren zur Herstellung von kopiergeschützten magnetischen Aufzeichnungsträgern durch Modifizierung eines Videosignales eines MAZ-Gerätes, bei dem Signalparameter des auf dem Aufzeichnungsträger (13) aufzuzeichnenden Videosignales $x(t)$ durch Skalierungsfunktionen $k(t)$ derart beeinflußt werden, daß bei einer ersten Wiedergabe des auf dem Aufzeichnungsträger (13) aufgezeichneten Videosignales ein als korrekt empfundenes erstes kopiertes Videosignal $w_1(t)$ entsteht und daß bei einer Wiedergabe des auf einem weiteren magnetischen Aufzeichnungsträger (23) aufgezeichneten ersten kopierten Videosignales $w_1(t)$ ein als sicher gestört empfundenes zweites kopiertes Videosignal $w_2(t)$ entsteht.

./...

FIG. 1

BEZEICHNUNG GEÄNDERT
Siehe Titelseite

Verfahren zur Herstellung von kopiergeschützten
magnetischen Aufzeichnungsträgern

Die vorliegende Erfindung betrifft ein Verfahren zur
Herstellung von kopiergeschützten magnetischen Aufzeichnungsträgern nach dem Oberbegriff des Patentanspruches 1.

Aus der US-PS 41 63 253 ist ein Verfahren zum Schutz
vor Raubkopien bekannt, bei dem ein Videosignal dadurch verändert wird, daß ein Impuls in das Austastintervall des Videosignales eingefügt wird, dessen
Amplitude im wesentlichen gleich dem Weiß-Spitzenpegel des Videosignales ist. Wenn das derart modifizierte Videosignal beim unerlaubten Überspielvorgang auf einem herkömmlichen Videorekorder aufgezeichnet wird, wird der zuvor eingefügte Impuls durch den
AGC-Detektor des Videorekorders nachgewiesen. Der Detektor bewirkt dann, daß der AGC-Verstärker das Videosignal vor der Aufzeichnung derart schwächt, daß eine
unbrauchbare Aufnahme entsteht.

Ein Nachteil eines derartigen Verfahrens besteht darin,
daß es durch relativ einfache Eingriffe am Videorekorder, mit dem Raubkopien hergestellt werden, außer Funktion gesetzt werden kann, weil der Videorekorder durch
derartige Eingriffe für die eingefügten Impulse unempfindlich gemacht werden kann.

Die Aufgabe der vorliegenden Erfindung besteht daher
darin, ein Verfahren zur Herstellung von kopiergeschützten magnetischen Aufzeichnungsträgern anzugeben, durch das zuverlässig gestörte Aufzeichnungsergebnisse
durch den zur Erzeugung von Raubkopien verwendeten Videorekorder erreicht werden, ohne daß es möglich ist,
das Verfahren durch Manipulationen am Videorecorder
außer Betrieb bzw. Funktion zu setzen.

Diese Aufgabe wird durch ein Verfahren der eingangs
genannten Art gelöst, das durch die in dem kennzeichnenden Teil des Patentanspruches 1 angeführten Merkmale gekennzeichnet ist.

Ein wesentlicher Vorteil besteht darin, daß nach dem
erfindungsgemäßen Verfahren ein Videosignal optimal
derart beeinflußt bzw. vorverzerrt, verformt und gewichtet wird, daß die Regel- und Fangautomatiken eines zur ersten bzw. 'erlaubten' Wiedergabe verwendeten Rekorders ein korrektes Videosignal ergeben und
daß die Regel- und Fangautomatiken eines zweiten Videorekorders, der zur Anfertigung einer Raubkopie verwendet wird, sicher nur noch ein gestörtes Videosignal zulassen.

Vorteilhafterweise arbeitet das erfindungsgemäße Verfahren nach dem Prinzip des sogenannten 'Worst-Case'.
Dies bedeutet, daß für die Gesamtzahl vorgegebener
Aufzeichnugnsparameter optimale Toleranz- und Störgrößenkriterien ermittelt werden, die mit handelsüblichen Geräten bei der ersten Übertragung jeweils
ein korrektes und bei der nachfolgenden zweiten Übertragung ein sicher gestörtes Aufzeichnungsergebnis

- 3 -

liefern. Das vorliegende Verfahren kann vorteilhafterweise im Zusammenhang mit allen üblichen Videosystemen (z.B. VHS, V 2000, Betamax) angewendet werden.

Ein weiterer wesentlicher Vorteil der vorliegenden
Erfindung besteht darin, daß es nicht erforderlich
ist, zusätzliche Hilfssignale in das Videosignal einzubringen. Derartige Hilfssignale haben nämlich den
Nachteil, daß sie sehr leicht erkennbar sind. Aus
diesem Grunde können verhältnismäßig leicht Maßnahmen ergriffen werden, die bei der Anfertigung von
Raubkopien zur Beseitigung dieser Hilfssignale führen. Im Gegensatz dazu sind die am Videosignal erfindungsgemäß vorgenommenen Modifikationen nicht erkennbar und so vielfältig, daß es unmöglich ist, Gegenmaßnahmen zu ergreifen.

0189548

- 4 -

Im folgenden wird das erfindungsgemäße Verfahren im Zusammenhang mit den Figuren näher erläutert. Es zeigt:

Figur 1 ein Blockschaltbild zur Erläuterung der Erfindung; und

Figuren 2 und 3 Videosignale zur Erläuterung der Erfindung

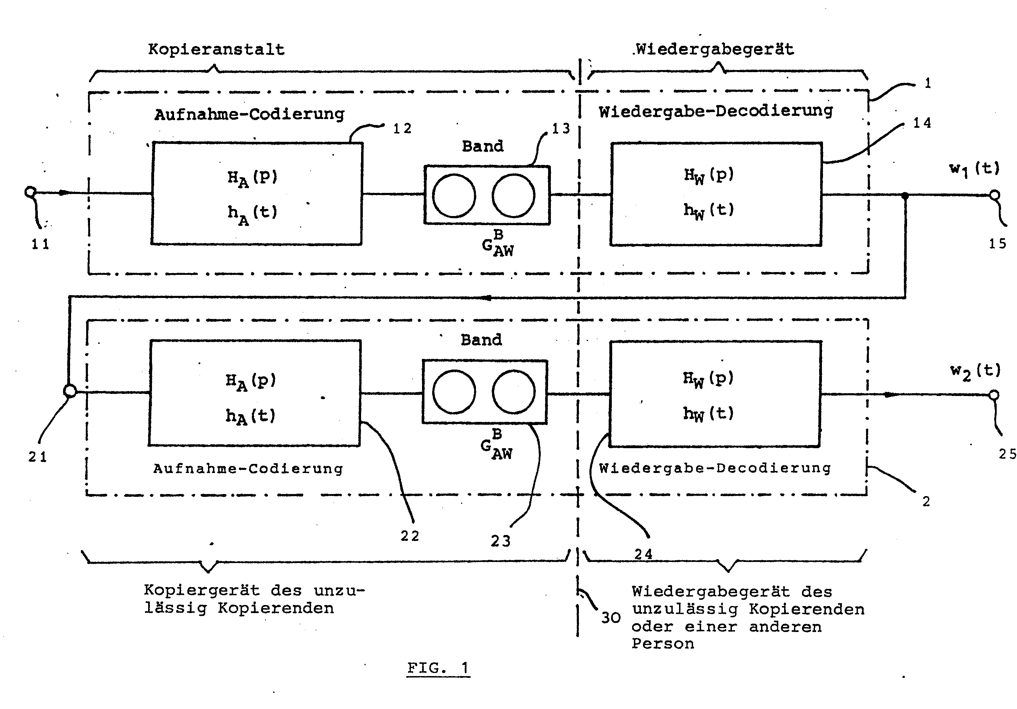

In der Figur 1 bezeichnet der Block 1 einen Videorekorder, wie er beispielsweise zur Anfertigung einer ersten Kopie oder zur Wiedergabe dieser ersten Kopie verwendet wird. Dabei wird dem Videorecorder 1 aus dem sogenannten MAZ-Gerät (magnetisches Aufzeichnungsgerät für die Mutter- bzw. Masterkopie) das Eingangssignal $x(t)$ an einem Eingang 11 zugeführt. Vom Eingang 11 wird das Eingangssignal einem Codierer 12 zur Durchführung der Aufnahmecodierung zugeführt. Das durch den Codierer 12 kodierte Signal wird auf einem Videoband 13 aufgezeichnet. Vom Videoband 13 wird das aufgezeichnete Signal einem Wiedergabe-Decodierer 14 zugeführt, an dessem Ausgang, der gleichzeitig den Ausgang 15 des Videorecorders 1 bildet, das erste Wiedergabesignal $w_1(t)$ erzeugt wird. An das erste Wiedergabesignal $w_1(t)$ wird die Anforderung gestellt, daß es in jedem Falle das Eingangssignal $x(t)$ korrekt wiedergibt. Anders ausgedrückt, muß das erste Wiedergabesignal $w_1(t)$ der Originalaufzeichnung entsprechen.

Normalerweise handelt es sich bei dem Codierer 12
des Blocks 1 um eine Standardfunktionsgruppe zur
Aufnahme-Codierung in einem kopierenden Videorekorder, mit dem erlaubte Kopien auf Videobändern 13 hergestellt werden. Bei dem Decodierer 14 des Blocks 1
handelt es sich normalerweise um eine Standardfunktionsgruppe zur Wiedergabe-Codierung in einem Videorekorder 1, mit dem gekaufte oder gemietete Videobänder 13 wiedergegeben werden. In der Figur 1 ist die
mögliche örtliche Trennung des Codierers 12 und des
Decodierers 14 durch die Linie 30 angedeutet.

In der Figur 1 bezeichnet der Block 2 einen zweiten
Videorekorder, wie er beispielsweise zur Anfertigung
von Raubkopien eingesetzt wird. Zu diesem Zweck wird
einem derartigen Videorekorder 2 das erste Wiedergabesignal $w_1(t)$ des Videorekorders 1 am Eingang 21 zugeführt. Das am Eingang 21 zugeführte erste Wiedergabesignal $w_1(t)$ wird bei der Anfertigung einer Raubkopie
durch den Aufnahme-Codierer 22 des Videorekorders 2
kodiert und auf einem Videoband 23 aufgezeichnet.
Dieses Videoband 23 stellt die Raubkopie dar. Bei der
Wiedergabe der Raubkopie wird das auf dem Band 23
aufgezeichnete Videosignal durch einen Wiedergabe-
Decodierer 23 dekodiert und dem Ausgang 25 des Videorekorders 2 als zweites Wiedergabesignal $w_2(t)$ zugeführt. An das zweite Wiedergabesignal $w_2(t)$ wird die
Anforderung gestellt, daß es derartig gestört bzw.
verzerrt ist, daß es keine akzeptable Wiedergabe
des Eingangssignales $x(t)$ des MAZ-Gerätes bzw. keine
akzeptable Wiedergabe der Originalaufzeichnung darstellt.

Der Aufnahme-Codierer 22 des Blocks 2 befindet sich in
Kopiergeräten, die zur Aufzeichnung von Raubkopien auf
Bändern 23 verwendet werden. Der Wiedergabe-Codierer
24 befindet sich normalerweise in Videorekordern, die
zur Wiedergabe von auf Bändern 23 aufgezeichneten Videosignalen verwendet werden.

Die vorliegende Erfindung beruht auf der Erkenntnis,
daß im Zusammenhang mit einem wirkungsvollen Kopierschutz eine besondere Schwierigkeit darin besteht, daß
ab dem Eingang 11 des Videorekorders 1, der hinter dem
MAZ-Gerät angeordnet ist, bis zum Ausgang 25 des zur
Wiedergabe einer Raubkopie verwendeten Videorekorders
2 oder bis zum Ausgang weiterer nachgeschalteter Videorekorder kein Systemparameter zugänglich ist. Die
Erfindung beruht daher darauf, daß das Eingangssignal
x(t) in einer definierten Weise unter optimaler Ausnutzung der festen System-Charakteristiken der handelsüblichen Videorekorder modifiziert wird.

Zum besseren Verständnis wird zunächst auf die im folgenden verwendeten Nomenklatur hingewiesen:

$v(t)$ = Aufzeichnungssignal (FBAS, Audio),

$k(t)$ = Skalierungsfunktion,

$n(t)$ = Störsignal,

$w_1(t)$ = Wiedergabesignal (am Ausgang 15)
der Originalaufzeichnung,

$w_2(t)$ = Wiedergabesignal (am Ausgang 25)
der zweiten Kopie,

$W_1(p)$, $W_2(p)$ = zugehörige Frequenz-Spektren

$h_A(t)$ = Impulsantwort des Videorekoder-Aufnahme-Kanals,

$h_W(t)$ = Impulsantwort des Videorekorder-Wiedergabekanals,

$H_A(p)$, $H_W(p)$ = zugehörige Übertragungsfunktion

$G_{AW}^B$ = Frequenzfunktion des Magnetkanals vom Schreib- bis zum Lesevorgang, Index "B" = Band Index "AW" = Aufnahme-Wiedergabe.

Aufgrund der nichtlinearen, zeitvarianten und pseudokausalen Eigenschaften des Magnetkanals wurde $G_{AW}^B$ nicht als "Übertragungsfunktion" bezeichnet.

Das nach dem vorliegenden Verfahren modifizierte Eingangssignal am Anschluß 11 läßt sich durch die folgende Gleichung ausdrücken:

$$x(t) = v(t) \cdot k(t) + n(t) \qquad (1)$$

Dabei stellen $k(t)$ eine Skalierungsfunktion und $n(t)$ ein Störsignal dar, die in Abhängigkeit von der Kenntnis der spezifischen Funktionsweise der handelsüblichen

- 8 -

Videorekorder (VHS-,Beta- und V 2000-Rekorder) durch
Beeinflussung sämtlicher möglicher Signalparameter derart optimal zu beeinflussen sind, daß das Aufzeichnungssignal $v(t)$ im ersten Wiedergabesignal $w_1(t)$ am Ausgang 15 des Videorekorders 1 optimal wiedergewonnen
wird und daß das Aufzeichnungssignal $v(t)$ im zweiten
Wiedergabesignal $w_2(t)$ für eine Betrachtung unbrauchbar ist. Dabei bieten die praktischen Video-Codierungsverfahren für die Wiedergabe zur Beeinflussung ein gut
nutzbares Kriterium, das vom jeweiligen Magnetkanal und
von allen nicht idealen, beispielsweise nicht linearen
Systemparametern abhängt. Das vorliegende Verfahren
nutzt den sogenannten Multi-Parameter-Worst-Case. Dies
bedeutet, daß die Skalierungsfunktion $k(t)$ und die
Störgröße $n(t)$ so bestimmt werden, daß die zweite Aufnahme zur Anfertigung einer Raubkopie auch durch den
Videorekorder 2 sicher gestört wird, der auf die Skalierungsfunktion $k(t)$ und die Störgröße $n(t)$ am schlechtesten anspricht.

Zur Ermittlung der anzuwendenden Skalierungsfunktion
$k(t)$ und der anzuwendenden Störgröße $n(t)$ wird das
Impulsübertragungsverhalten zweier gemäß der Figur
hintereinandergeschalteter Videorekorder bzw. Kopiergeräte untersucht. Dabei gilt für das Frequenzspektrum
des ersten Videorekorders 1:

$$W_1(p) = H_A(p) \cdot G_{AW}^B \cdot H_W(p) \cdot X(p) \qquad (2)$$

Für das Frequenzspektrum des zweiten Videorekorders 2
gilt entsprechend:

- 9 -

$$W_2(p) = \left[ H_A(p) \cdot G_{AW}^B \cdot H_W(p) \right]^2 X(p) \qquad (3)$$

Es ist ersichtlich, daß entsprechend einer ersten Näherung von einer Quadratur der Bildfunktion im Spektralbereich ausgegangen werden kann. Zusätzlich unterliegt die tatsächliche Signalkette Unterscheidungsmerkmalen, die durch die Charakteristik des Magnetkanals (Videoband) bewirkt werden.

Erfindungsgemäß werden die Größen $H_A(p)$ und $H_W(p)$ durch Prüfung eienr repräsentativen Anzahl von Videorekordern eines Systems (z.B. VHS, V 2000, Betamax) bestimmt. Hierzu wird jeweils die numerische Impulsantwort h(t) für die Aufnahmecodierer 12, das Band 13 und den Wiedergabe-Decodierer 14 dadurch ermittelt, daß an die jeweiligen Eingänge ein Testsignal x'(t) angelegt wird und in Antwort darauf an den jeweiligen Ausgängen ein Antwortsignal y'(t) ermittelt wird. Die jeweiligen Testsignale x(t) und die entsprechenden Antwortsignale y'(t) werden durch rechnermäßige bzw. computergestützte Laplace-Transformationen in die entsprechenden Spektren X'(p) (Eingang) und Y'(p) (Ausgang) umgewandelt. Nach der Formel H'(p) = Y'(p) / X'(p) ergeben sich dann die entsprechenden Übertragungsfunktionen Y'(p), aus denen durch erneute rechnermäßige bzw. computergestützte Laplace-Transformationen die numerischen Impulsantworten, die für die entsprechenden Geräte spezifisch sind, ermittelt werden können.

Alle Operationen im Zeit- und Frequenzbereich bedingen aufgrund der erheblichen Komplexität des Aufzeichnungs-
und Wiedergabekanals eines Videorekorders grundsätzlich
die numerische Bestimmung der Zeit- und Bildfunktionen
durch ein Computersystem.

Nach Kenntnis der Übertragungsfunktionen des ersten und
zweiten Videorekorders 1, 2 ist es nun möglich, mit der
Hilfe der mathematischen Faltung jeweils die Antwortsignale $w_1(t)$, $w_2(t)$ aus den Eingangssignalen $x(t)$,
$w_1(t)$ und den Übertragungsfunktionen $y_1(t)$, $y_2(t)$ zu
bestimmen. Die mathematischen Formeln hierfür lauten:

$$w_1(t) = h_1(t) * x(t)$$

$$w_2(t) = h_1(t) * h_2(t) * x(t),$$

wobei "*" die mathematische Operation der Faltung bezeichnet. $h_1(t)$ bezeichnet die erste Übertragung des
Videosignales durch den Videorekorder 1. $h_2(t)$ betrifft
die zweite Übertragung des Videosignales durch den Videorekorder 2. Durch die Faltung können nun sämtliche
mögliche  Signalparameter eingangsseitig derart optimal beeinflußt werden, daß die Regel- und Fangautomatiken des ersten Videorekorders 1 bei der ersten Übertragung des Videosignales ein korrektes Signal $w_1(t)$
zulassen und daß die Regel- und Fangschaltungen des
zweiten Videorekorders 2 bei der zweiten Übertragung
sicher nur ein gestörtes Signal $w_2(t)$ zulassen. Dabei
können infolge der auf die zuvor beschriebenen Weise
gewonnenen Kenntnisse der spezifischen Funktionsweisen
von VHS-, Beta- und V 2000-Rekordern jeweils optimale
Parameterbeeinflussungen systematisch ermittelt werden.

Die störenden Parametermaßnahmen betreffen dabei
wertmäßige, zeitmäßige und frequenzspezifische Charakteristiken. Beispielsweise können Hüllkurven von
Signalparametern durch Skalierungsfunktionen verändert werden, wobei diese Veränderungen sich vorteilhafterweise auch fortlaufend zeitlich verändern können.
Derartig veränderbare Hüllkurven können auch durch
Addition und/oder Subtraktion von Störsignalen zusätzlich modifiziert werden, wobei sich diese Störsignale vorteilhafterweise ebenfalls fortlaufend zeitlich verändern können.

Signalparameter können durch Skalierungsfunktionen
auch bezüglich ihrer Phase verändert werden, so
daß eine zeitliche Drift dieser Signalparameter bewirkt wird. Dabei können sich derartige Phasenänderungen
ebenfalls fortlaufend zeitlich verändern.

An Signalparametern können durch Skalierungsfunktionen auch Frequenzänderungen bewirkt werden. Derartige
Frequenzfehler können sich vorteilhafterweise auch
fortlaufend zeitlich ändern.

Die zuvorgenannten Skalierungsfunktionen und ggf. auch
die genannten Störfaktoren können zusammen oder getrennt
auf eine beliebige Anzahl von jeweils geeigneten Signalparamtern des Videosignals des MAZ-Gerätes einwirken. Es ist dabei lediglich von Bedeutung, daß an dem
ersten kopierten Videosignal und an dem zweiten kopierten Videosignal die jeweils gewünschten Wirkungen
eintreten, die voranstehend bereits erläutert wurden.

- 12 -

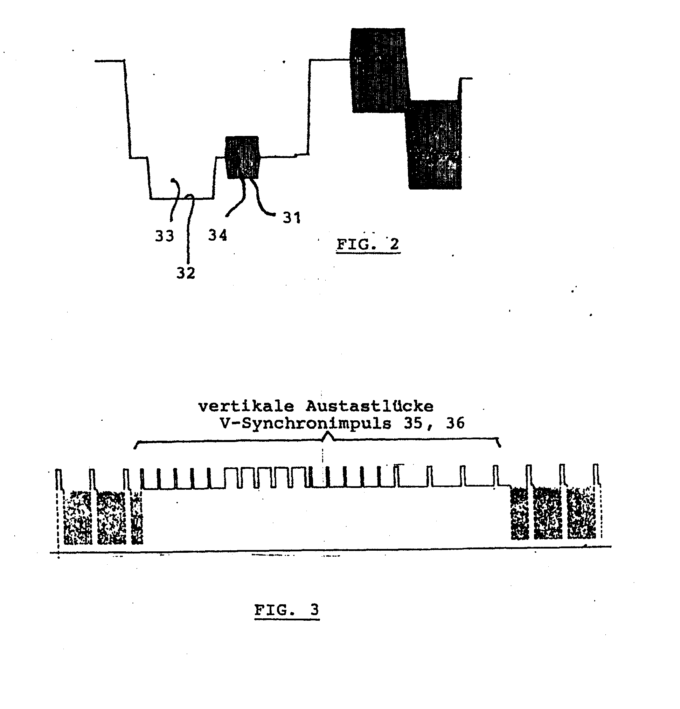

Im folgenden wird im Zusammenhang mit den Figuren 2 und
3 eine Übersicht über zur Parameterbeeinflussung vorgesehenen Signalgrößen gegeben.

Burst-Jitter

Es werden die Phasen- und Frequenzfehler des
Burst-Signales 31 (Farbfrequenzsignal) bewirkt.
Dabei können diese bewirkten Fehler sich vorteilhafterweise auch zeitlich verändern, d.h.
also beispielsweise eine lineare Frequenz- und
Phasenmodulation darstellen.

Burst-Hüllkurve

Es wird die in der Figur 2 geradlinig verlaufende Hüllkurve 32 durch eine beliebige Zeitfunktion ersetzt. Beispielsweise sind in dieser zeitlichen Variation auch zusätzliche Störsignale
enthalten.

H-Synchronimpuls-Verformung

Zur Verformung kommen alle möglichen, die Einhüllende des H-Synchronimpulses 33 verändernden
Störsignale in Frage.

H-Synchronimpuls-Jitter

Es werden Phasenfehler, die einer zeitlichen Drift entsprechen, bewirkt. Dabei können diese bewirkten Fehler sich vorteilhafterweise fortlaufend zeitlich verändern, d.h. also bei- spielsweise eine lineare Phasenmodulation dar- stellen.

V-Synchronimpuls-Verformung

Der Verformung kommen alle möglichen, die Einhüllende des V-Synchronimpulses 35, 36 verändernden Störsignle in Frage.

V-Synchronimpuls-Jitter

Es werden Phasenfehler, die einer zeitlichen Drift entsprechen, bewirkt. Dabei können diese bewirkten Fehler sich vorteilhafterweise auch fortlaufend zeitlich verändern, d.h. also bei- spielsweise eine lineare Phasenmodulation dar- stellen.

Störung der DTF-Frequenzen beim System V 2000

Diese Störungen betreffen die dynamische Spur- verfolgung (Dynamic Track Follow)

ol.-Ing. **Nikolaus von Puttkamer**
Patentanwalt

Zugelassen beim
Europäischen Patentamt

Postadresse:
Pienzenauerstraße 2
8000 München 80
Telefon: (089) 98 03 24 und 98 72 58

Telex: 5 227 67

**0189548**

P 3445 V

VPS Video-Programm Service
Saarstraße 7
8000 München 40

BEZEICHNUNG GEÄNDERT
Siehe Titelseite

Verfahren zur Herstellung von kopiergeschützten magnetischen Aufzeichnungsträgern

1) Verfahren zur Herstellung von kopiergeschützten magnetischen Aufzeichnungsträgern durch Modifizierung
eines Videosignales eines MAZ-Gerätes, dadurch gekennzeichnet, daß Signalparameter des auf dem Aufzeichnungsträger (13) aufzuzeichnenden Videosignales
$x(t)$ durch Skalierungsfunktionen $k(t)$ derart beeinflußt wurden, daß bei einer ersten Wiedergabe des
auf dem Aufzeichnungsträger (13) aufgezeichneten
Videosignales ein als korrekt empfundenes erstes kokopiertes Videosignal $w_1(t)$ entsteht und daß bei
einer Wiedergabe des auf einem weiteren magnetischen Aufzeichnungsträger (23) aufgezeichneten ersten kopierten Videosignales $w_1(t)$ ein als sicher
gestört empfundenes zweites kopiertes Videosignal
$w_2(t)$ entsteht.

2) Verfahren nach Anspruch 1, dadurch gekennzeichnet,
daß durch die Skalierungsfunktion an Signalparametern des auf dem Aufzeichnungsträger (13) aufzuzeichnenden Videosignales x(t) Frequenzfehler bewirkt werden.

3) Verfahren nach Anspruch 2, dadurch gekennzeichnet,
daß die durch die Skalierungsfunktion bewirkten
Frequenzfehler sich fortwährend zeitlich verändern.

4) Verfahren nach Anspruch 2 oder 3, dadurch gekennzeichnet, daß als Signalparameter das Burst-Signal
(31) und/oder ggf. beim System V 2000 die DTF-
Frequenzen verändert werden.

5) Verfahren nach einem der Ansprüche 1 bis 4, dadurch
gekennzeichnet, daß durch die Skalierungsfunktion
an Signalparametern des auf dem Aufzeichnungsträger
(13) aufzuzeichnenden Videosignales x(t) Phasenfehler bewirkt werden.

6) Verfahren nach Anspruch 5, dadurch gekennzeichnet,
daß die durch die Skalierungsfunktion bewirkten Phasenfehler sich fortwährend zeitlich verändern.

7) Verfahren nach Anspruch 5 oder 6, dadurch gekennzeichnet, daß als Signalparameter das Burst-Signal (31) und/oder der H-Synchronimpuls (33) und/oder der V-Synchronimpuls (35, 36) verändert werden.

8) Verfahren nach einem der Ansprüche 1 bis 7, dadurch gekennzeichnet, daß durch die Skalierugsfunktion an Signalparametern Hüllkurvenveränderungen bewirkt werden.

9) Verfahren nach Anspruch 8, dadurch gekennzeichnet,
daß sich die bewirkten Hüllkurvenveränderungen fortwährend zeitlich verändern.

10) Verfahren nach Anspruch 8 oder 9, dadurch gekennzeichnet, daß die Hüllkurve des Burst-Signales (31)
und/oder des H-Synchronimpulses (32) und/oder des
V-Synchronimpulses (35,36) verformt werden.

11) Verfahren nach einem der Ansprüche 1 bis 10, dadurch
gekennzeichnet, daß zusätzlich Signalparameter durch
ein Störsignal n(t) gestört werden.

12) Verfahren nach Anspruch 11, dadurch gekennzeichnet,
daß sich das Störsignal fortwährend zeitlich verändert.

13) Verfahren nach Anspruch 11 oder 12, dadurch gekennzeichnet, daß das Störsignal sich zu der Burst-Hüllkurve (32) und/oder dem H-Synchronimpuls (32) und/oder dem V-Synchronimpuls (35,36) addierende Störimpulse umfasst.

14) Verfahren nach Anspruch 11 oder 12, dadurch gekennzeichnet, daß das Störsignale sich von der Burst-Hüllkurve (32) und/oder dem H-Synchronsimpuls (33) und/oder dem H-Synchronimpuls (35, 36) subtrahierende Signale umfasst.

15) Verfahren nach einem der Ansprüche 1 bis 14, dadurch gekennzeichnet, daß die Skalierungsfunktionen und ggf. die Störfunktionen durch numerische Bestimmung der Zeit- und Bildfunktionen des Aufzeichnungs- und Wiedergabekanals einer repräsentativen Reihe von Videorekordern eines Systemes durch ein Computersystem so bestimmt werden, daß das zweite kopierte Videosig-nal $w_2(t)$ auch durch den das zweite kopierte Video-signal $w_2(t)$ wiedergebenden Videorekorder (2) sicher gestört wird, der auf die Skalierungsfunktionen und ggf. die Störsignale am schlechtesten anspricht.

FIG. 1

2/2

33  34    31
   32

FIG. 2

vertikale Austastlücke
V-Synchronimpuls 35, 36

FIG. 3

**0189548**

Nummer der Anmeldung

**EUROPÄISCHER RECHERCHENBERICHT**

Europäisches
Patentamt

EP 85 11 5099

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 924 453 (BREU) <br> * Seite 7, Zeile 9 - Seite 10, Zeile 9; Figur 1 * <br> --- | 1 | H 04 N 5/91 |
| A,D | US-A-4 163 253 (MORIO et al.) <br> * Seite 2, Zeilen 14-47 * <br> ----- | 1 | |

| | RECHERCHIERTE SACHGEBIETE (Int. Cl.4) |
|---|---|
| | H 04 N 5/00 |

Der vorliegende Recherchenbericht wurde für alle Patentansprüche erstellt.

| Recherchenort | Abschlußdatum der Recherche | Prüfer |
|---|---|---|
| BERLIN | 31-01-1986 | DUDLEY C. |